# EUROPEAN PATENT APPLICATION

(11) **EP 3 016 481 A1**
(43) Date of publication of application: **04.05.2016**
(21) Application number: 14818046.6
(22) Date of filing: 25.06.2014
(51) Int. Cl.: H05B 37/02

(54) **METHOD FOR CONTROLLING DIMMING OF STREET LAMP TO REDUCE POWER CONSUMPTION AND STREET LAMP**

(30) Priority: 25.06.2013 KR 20130072768
(71) Applicant: KMW Inc., Gyeonggi-do 445-813 (KR)
(72) Inventor: KIM, Duk-Yong, Hwaseong-si Gyeonggi-do 445-813 (KR); KIM, Geun-Young, Suwon-si Gyeonggi-do 443-737 (KR); YOO, Seung-Bum, Osan-si Gyeonggi-do 447-805 (KR)
(74) Representative: RatnerPrestia
(86) International application number: PCT/KR2014/005614
(87) International publication number: WO 2014/209002

(57) **Abstract**

The present invention relates to a method for controlling dimming of a streetlamp to reduce power consumption. In the method for controlling the dimming of the streetlamp, the streetlamp comprises a plurality of illumination units, of which dimming can be individually controlled, and at least one illumination unit among the plurality of illumination units has a wattage smaller than that of another illumination unit. According to the present invention, a plurality of LEDs included in a streetlamp are randomly divided according to the direction of progress of a vehicle and dimming of the divided LEDs are controlled with different levels, so that luminance degradation felt by a driver on a road can be minimized. As a result, the present invention can save energy and solve inconvenience to the driver.

## Description

### Detailed Description of the Invention

### Technical Field

The present invention relates to a method for controlling dimming of a streetlamp to reduce power consumption, and more particularly, to a method for controlling dimming of a streetlamp to reduce power consumption in such a way to control the dimming of the streetlamp according to times in consideration of the volume of traffic to further reduce power consumption.

### Background Art

Lately, as an amount of electricity consumption increases, the occurrence probability of blackout is also increasing. For this reason, various policies for reducing power consumption during peak hours of power consumption are being suggested. For example, various methods, such as enforcing building energy simulation to impose penalty surcharge to buildings exceeding the standard, changing lunch time, changing uniform regulations, and adjusting the interval between subway trains, come into effect.

Most of streetlamps installed on roads operates in such a way to be turned on or off automatically according to ambient light in order to reduce energy usage. Lately, a LED streetlamp using LEDs with relatively low power consumption as light sources was suggested.

However, when such LED streetlamps illuminate roads with the same illuminance at nighttime, energy may be unnecessarily consumed during a midnight time zone with little traffic.

In order to overcome the problem, Korean Laid-open Patent Application No. 10-2012-0130424 (Laid-open on December 3, 2012, entitled "A LED Streetlamp Having A Power Saving System and its System") discloses a technique of dividing time zones in consideration of the volume of traffic and performing dimming of lowering the illuminance of a streetlamp by 30% during energy-saving time zones with low traffic to save energy.

However, since the technique dims all LEDs included in a LED streetlamp to the same illuminance at the same time, there is a problem that the luminance felt by a driver on a road is significantly lowered due to the uniform low illuminance, although some energy saving effect can be obtained.

Accordingly, a driver who drives a vehicle at midnight time with little traffic may easily drowse at such low illuminance or may fail to promptly recognize objects around the vehicle during high-speed driving, which may increase the occurrence risk of traffic accidents.

### Disclosure

### Technical Problem

In order to overcome the problems, an aspect of the present invention provides a method for controlling dimming of a streetlamp to reduce power consumption by performing dimming control of lowering illuminance according to time zones such that luminance degradation felt by a driver on a road can be minimized.

Another aspect of the present invention provides a method for controlling dimming of a streetlamp to reduce consumption power, which is capable of reducing power consumption on the condition that luminance felt by a driver is the same as in a typical dimming method.

### Technical Solution

In accordance with an aspect of exemplary embodiments of the present invention, there is provided a method of controlling dimming of a streetlamp to reduce power consumption, the streetlamp including a plurality of illumination units configured to be respectively dimming-controlled, wherein a wattage that is supplied to at least one illumination unit of the plurality of illumination units is lower than a wattage that is supplied to the other illumination units.

### Advantageous Effects

In the method for controlling dimming of a streetlamp to reduce power consumption, according to the present invention, a plurality of LEDs included in the streetlamp are randomly divided according to the direction of progress of a vehicle and the divided LEDs are dimming-controlled to different levels so that luminance degradation felt by a driver on a road can be minimized, resulting in saving of energy and solving of inconvenience to the driver.

In addition, light distribution is controlled such that illuminance of LEDs at a position which a vehicle enters is higher than that of LEDs at another position which the vehicle exits, thereby further reducing power consumption while providing the same luminance condition to a driver.

### BRIEF DESCRIPTION OF THE DRAWINGS

FIG. 1 is a configuration diagram showing a part of a streetlamp to which a method for controlling dimming of a streetlamp to reduce power consumption, according to a preferred embodiment of the present invention, can be applied;
FIG. 2 is a light distribution schematic view for describing a method for controlling dimming of a streetlamp to reduce power consumption, according to a preferred embodiment of the present invention;
FIGS. 3 and 4 are graphs showing a polar light distribution simulation and luminance distribution on a road when a wattage of 24watt is supplied to all illumination units;
FIGS. 5 and 6 are graphs showing a polar light distribution simulation and luminance distribution on a road when a wattage of 75.5watt is supplied to first to sixth illumination units;
FIGS. 7 and 8 are graphs showing a polar light distribution simulation and luminance distribution on a road when different wattages are respectively supplied to individual illumination units; and
FIGS. 9 and 10 are graphs showing a polar light distribution simulation and luminance distribution on a road when the same wattage is supplied to first to fifth illumination units and a different wattage is supplied to a sixth illumination unit.

### Best Mode

Hereinafter, a method of controlling dimming of a streetlamp to reduce power consumption according to the present invention will be described with reference to the accompanying drawings.

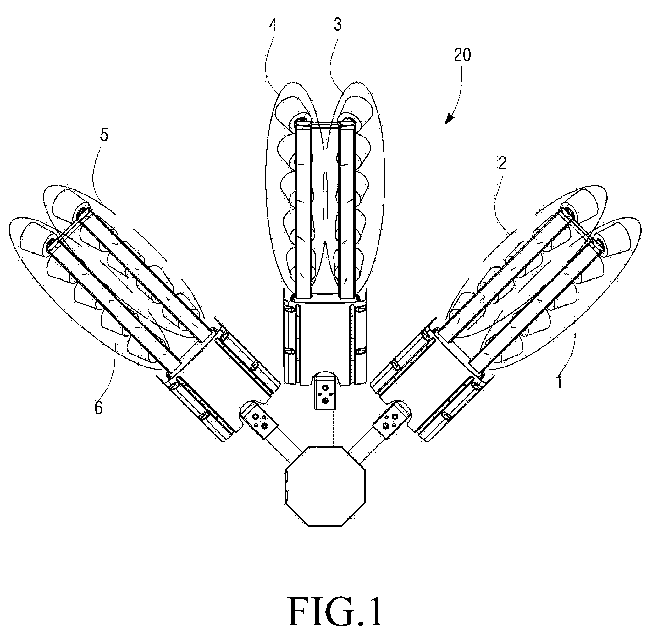

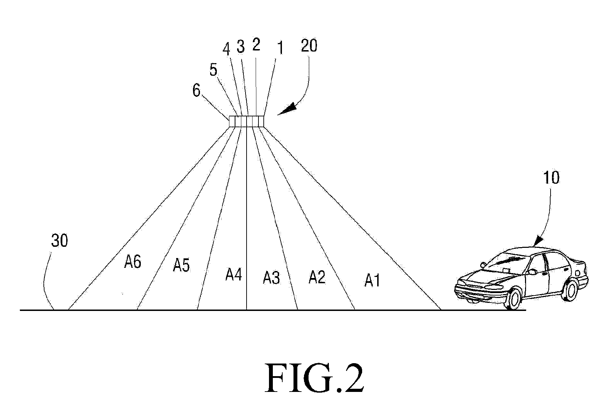

FIG. 1 is a configuration diagram showing a part of a streetlamp to which a method for controlling dimming of a streetlamp to reduce power consumption, according to a preferred embodiment of the present invention, can be applied, and FIG. 2 is a light distribution schematic view for describing a method for controlling dimming of a streetlamp to reduce power consumption, according to a preferred embodiment of the present invention.

Referring to FIGS. 1 and 2, the present invention can be applied to a streetlamp 20 having first to sixth illumination units 1 to 6 that are respectively dimming-controlled to different levels in the direction of progress of a vehicle.

However, the number of the illumination units 1 to 6 or the structure of the streetlamp 20 is irrelevant to a configuration of the present invention which will be described below. That is, the number of the illumination units 1 to 6 that can be dimming-controlled or a detailed configuration of the streetlamp 20 can be modified by one of ordinary skill in the art based on the present invention.

A vehicle 10 may travel on a road 30 in the same direction of progress with respect to the streetlamp 20 that is installed along the edge of the road 30. Accordingly, the first to sixth illumination units 1 to 6 may illuminate the road 30 sequentially in the direction of progress of the vehicle 10.

That is, the first illumination unit 1, the second illumination unit 2, the third illumination unit 3, the fourth illumination unit 4, the fifth illumination unit 5, and the sixth illumination unit 6 may correspond, in this order, to the direction of progress of the vehicle 10. Accordingly, when the vehicle 10 travels on the road 30 at whose edge the streetlamp 20 is installed, the vehicle10 may sequentially pass through an area A1 that the first illumination unit 1 illuminates, an area A2 that the second illumination unit 2 illuminates, an area A3 that the third illumination unit 3 illuminates, an area A4 that the fourth illumination unit 4 illuminates, an area A5 that the fifth illumination unit 5 illuminates, and finally an area A6 that the sixth illumination unit 6 illuminates, according to elapse of time.

In this case, the first to sixth illumination units 1 to 6 may be respectively set to have predetermined wattages that decide dimming levels. Generally, a predetermined wattage may be supplied to the first to sixth illumination units 1 to 6 to illuminate the road 30. According to an embodiment of the present invention, a wattage of, for example, 120watt may be supplied to the first to sixth illumination units 1 to 6 during a predetermined time zone, for example, during a nighttime zone with heavy traffic, and a wattage of 75.5watt may be supplied to the first to sixth illumination units 1 to 6 during, for example, a midnight time zone with little traffic.

The first illumination unit 1 and the sixth illumination unit 6 positioned at both ends of the first to sixth illumination units 1 to 6 may illuminate the most distant areas from the center of the streetlamp 20. Although the area of the road 3 illuminated by the streetlamp 20 is illuminated with a predetermined illuminance average value, a driver of the vehicle 10 may feel a relative luminance difference on the road 30 according to light distribution of the first to sixth illumination units 1 to 6.

That is, light irradiated from the first illumination unit 1 may have light distribution of being reflected from the road 20 and then reflected toward the front part of the vehicle 10 before the vehicle 10 arrives at the streetlamp 20, so that the light may be felt as higher luminance by the driver than its original luminance. Meanwhile, light irradiated from the sixth illumination unit 6 may have light distribution of illuminating the rear part of the vehicle 20 passed through the streetlamp 20 so that the driver may recognize lower luminance at the corresponding position. The luminance difference felt by the driver according to the difference in light distribution becomes an important concept in the configuration of the present invention, and the difference in luminance recognition is used to provide luminance of the road 30 capable of satisfying rules with a minimum wattage.

In the following Table 1, when a wattage of 120watt is supplied to the first to sixth illumination units 1 to 6, which may correspond to a lighting condition during a nighttime zone with heavy traffic, a total wattage and average luminance are shown. The total of wattage supplied to the first to sixth illumination units 1 to 6, that is, a total wattage supplied to the streetlamp 20 is 720watt, and in this case, average luminance becomes 1.53cd/m². The average luminance means the average of luminance felt by drivers that drive along three lanes, when the road 30 at whose edge the streetlamp 20 is installed has the three lanes.

More specifically, the average luminance value may be a value obtained by simulating luminance felt by the driver when the vehicle 10 is located 60m from the streetlamp 20 before arriving at the streetlamp 20.

Referring to FIG. 1, each of the first to sixth illumination units 1 to 6 may include five LED lights, and a wattage that is supplied to the individual LED lights may be 24watt.

The average luminance may depend on the number of lanes. However, in the following description, the average luminance is assumed to be the average of luminance felt by drivers of vehicles traveling along three lanes, in order to examine differences of results between a typical method of dimming all LED lights included in a streetlamp to the same level and a method according to the present invention of dividing lights included in a streetlamp into first to sixth illumination units to differentially control the first to sixth illumination units, under the same conditions.

**[Table 1]**

| illumination unit 1 | illumination unit 2 | illumination unit 3 | illumination unit 4 |
|---|---|---|---|
| 120watt | 120watt | 120watt | 120watt |
| illumination unit 5 | illumination unit 6 | Total Wattage | Average Luminance |
| 120watt | 120watt | 720watt | 1.53cd/m² |

Table 1 shows average luminance of 1.53cd/m² exceeding 1.50d/m² that is reference luminance for a nighttime zone with heavy traffic. The nighttime zone with heavy traffic may be a time zone from about 18:00 to about 22:00 based on when streetlamps need to be turned on. Time zones may be divided according to the volume of traffic, in consideration of the locations of roads, environment conditions, and seasonal factors. That is, the above-mentioned time zone is only an example for describing the present invention.

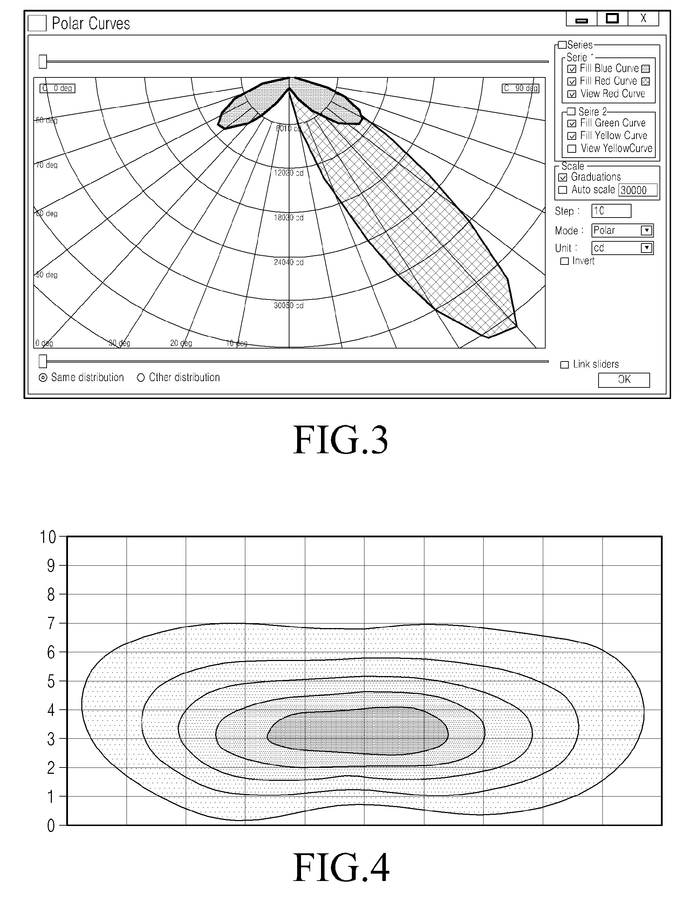

The luminance of the road 30 according to the wattage supplied to the illumination units 1 to 6 may be the results of simulation by a computer program, and the simulation results are shown in FIGS. 3 and 4.

FIGS. 3 and 4 are graphs showing a polar light distribution simulation and luminance distribution on a road when a wattage of 24watt is supplied to all the illumination units 1 to 6.

In this case, during a midnight time zone with little traffic, dimming control of reducing a wattage that is supplied to the illumination units 1 to 6 may be performed. The midnight time zone may be set to a time zone from 22:00 to 05:00, and according to the rules, average luminance of at least 1cd/m² has to be ensured for the midnight time zone.

Table 2 shows a total wattage and average luminance when all the illumination units 1 to 6 are dimming-controlled to the same level according to the typical method to ensure minimum luminance satisfying the rules.

**[Table 2]**

| illumination unit 1 | illumination unit 2 | illumination unit 3 | illumination unit 4 |
|---|---|---|---|
| 75.5watt | 75.5watt | 75.5watt | 75.5watt |
| illumination unit 5 | illumination unit 6 | Total Wattage | Average Luminance |
| 75.5watt | 75.5watt | 453watt | 1.04cd/m² |

As seen in Table 2, average luminance of 1.04cd/m² that exceeds minimum luminance according to the rules is acquired when a wattage of 75.5watt is supplied to all the illumination units 1 to 6. In this case, a total wattage is 453watt, which is significantly lower than the total wattage of 720watt required for the time zone with heavy traffic.

The results of Table 2 are those obtained when dimming of 37.1% was performed compared to the results of Table 1. When the results of Table 1 are those corresponding to 100% output (0% dimming) of the streetlamp 20, the results of Table 2 are those satisfying luminance criteria for the midnight time zone with little traffic with the output level of 62.9%. That is, this means that energy consumption can be reduced by 37.1%.

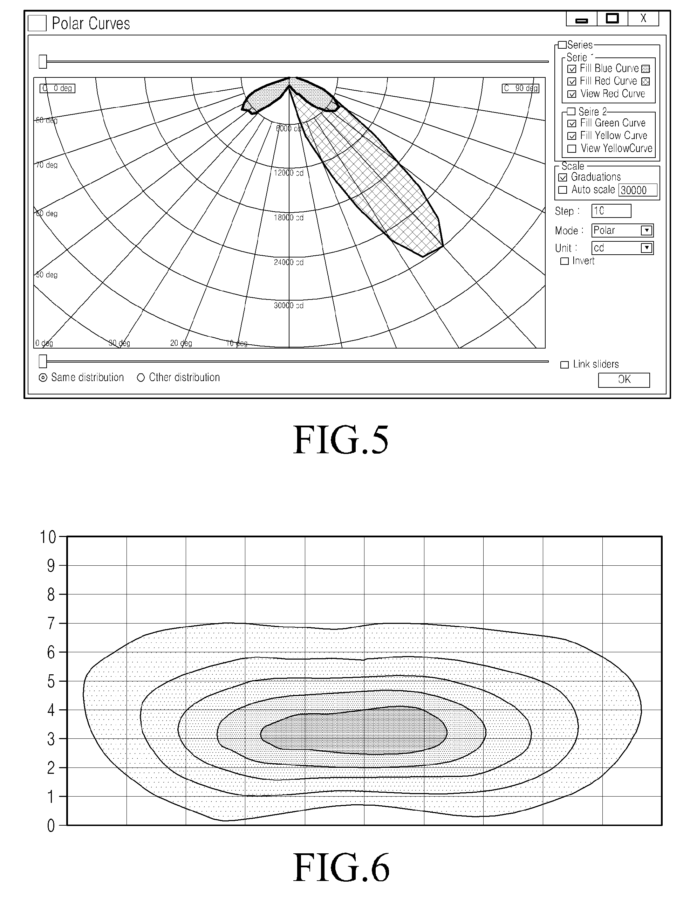

FIGS. 5 and 6 are graphs showing a polar light distribution simulation and luminance distribution on a road when a wattage of 75.5watt is supplied to the first to sixth illumination units 1 to 6 as shown in Table 2.

However, the dimming method leading to the results of Table 2 is the same as dimming the entire of a streetlamp as described above, and the present invention proposes a method that can further reduce a total wattage compared to the results of Table 2 by using a luminance difference felt by a driver according to the positions and light distribution of the illumination units 1 to 6, as follows.

Table 3 shows a total wattage and average luminance when different wattages are respectively supplied to the illumination units 1 to 6 such that average luminance exceeds 1cd/m² that is a minimum luminance value according to the rules.

**[Table 3]**

| illumination unit 1 | illumination unit 2 | illumination unit 3 | illumination unit 4 |
|---|---|---|---|
| 110watt | 90watt | 84watt | 72watt |
| illumination unit 5 | illumination unit 6 | Total Wattage | Average Luminance |
| 60watt | 48watt | 420watt | 1.06cd/m² |

Table 3 shows simulation results for a minimum average luminance value satisfying the rules when different wattages are respectively supplied to the illumination units 1 to 6.

In this case, the luminance of the first area A1 that the first illumination unit 1 illuminates, felt by the driver, may be higher than the luminance of the other areas, under the same conditions, since light is reflected toward the driver's front view, as described above. A wattage that is supplied to the first illumination unit 1 may be set to the highest value, and sequentially reducing wattages may be respectively supplied to the second to sixth illumination units 2 to 6.

More specifically, a wattage of 110watt may be supplied to the first illumination unit 1, a wattage of 90watt may be supplied to the second illumination unit 2, a wattage of 84watt may be supplied to the third illumination unit 3, a wattage of 72watt may be supplied to the fourth illumination unit 4, a wattage of 60watt may be supplied to the fifth illumination unit 5, and a wattage of 48watt may be supplied to the sixth illumination unit 6. However, the above-mentioned values may vary as long as a wattage that is supplied to the sixth illumination unit 6 is necessarily lower than a wattage that is supplied to the first illumination unit 1, and supply wattages are sequentially reduced from the first illumination unit 1 to the sixth illumination unit 6.

That is, although wattages that are supplied to the first to sixth illumination units 1 to 6 are adjusted as long as a total wattage becomes 420watt like the example of Table 3, average luminance satisfying the rules can be acquired. The results of Table 3 may correspond to dimming of 41.7% and the output of 58.3% with respect to the results of Table 1.

This means that the method according to the present invention can increase average luminance while supplying lower wattages, compared to the case of supplying the same wattage to all the illumination units 1 to 6. As a result, a wattage of 4.6% can be saved compared to the example described above with reference to Table 2.

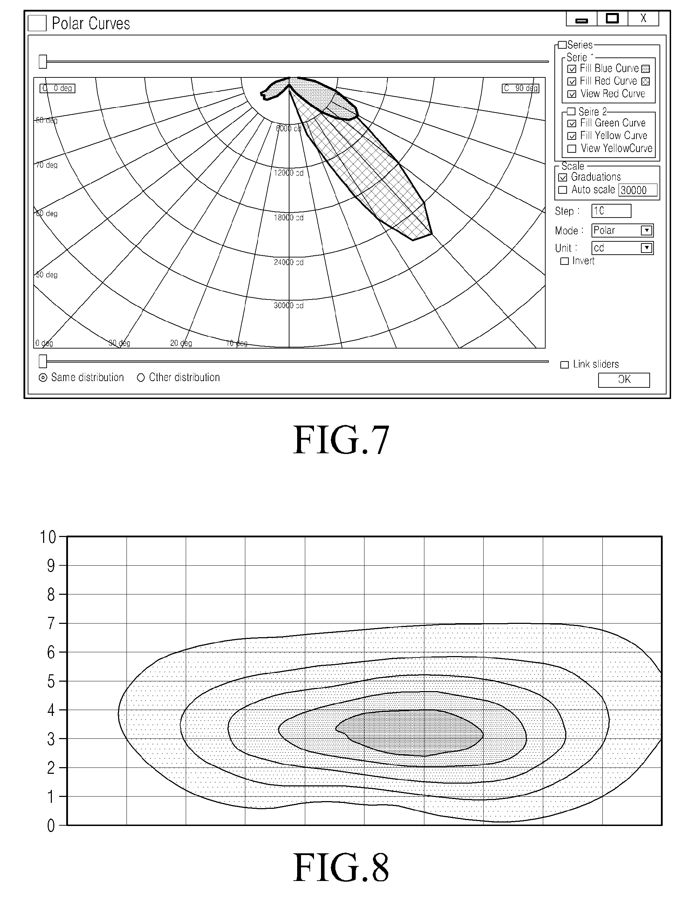

FIGS. 7 and 8 are graphs showing a polar light distribution simulation and luminance distribution on a road when different wattages are respectively supplied to the illumination units 1 to 6, as seen in Table 3.

As such, according to the present invention, by dividing the LED streetlamp 20 into the plurality of illumination units 1 to 6 that can be dimming-controlled according to the direction of progress of the vehicle 10, and supplying sequentially reducing wattages to the respective illumination units 1 to 6 from the direction of the vehicle toward the streetlamp 20(supplying sequentially reducing wattages to the respective illumination units 1 to 6 from the illumination unit illuminating an area which the vehicle 10 first enters when approaching the streetlamp 20), it is possible to further save power consumption than the case of uniformly dimming all LEDs of a LED streetlamp.

The following Table 4 is provided to describe another embodiment of the present invention. Table 4 corresponds to the case in which the same wattage is supplied to the first to fifth illumination units 1 to 5, and a different wattage is supplied to the sixth illumination unit 6.

**[Table 4]**

| illumination unit 1 | illumination unit 2 | illumination unit 3 | illumination unit 4 |
|---|---|---|---|
| 120watt | 120watt | 120watt | 120watt |
| illumination unit 5 | illumination unit 6 | Total Wattage | Average Luminance |
| 120watt | 60watt | 660watt | 1.45cd/m² |

As seen in Table 4, the same wattage of 120watt may be supplied to the first to fifth illumination units 1 to 5, and a wattage of 60watt that is half of the wattage supplied to the first to fifth illumination units 1 to 5 may be supplied to the sixth illumination unit 6.

In this case, average luminance exceeding 1cd/m² that is minimum luminance according to the related rules can be acquired. That is, by dimming-controlling the first to sixth illumination units 1 to 6 such that a wattage that is supplied to at least the first illumination unit 1 is higher than a wattage that is supplied to the sixth illumination unit 6, without having to supply different wattages to the individual illumination units 1 to 6 like the above-described embodiment, a total wattage can be reduced.

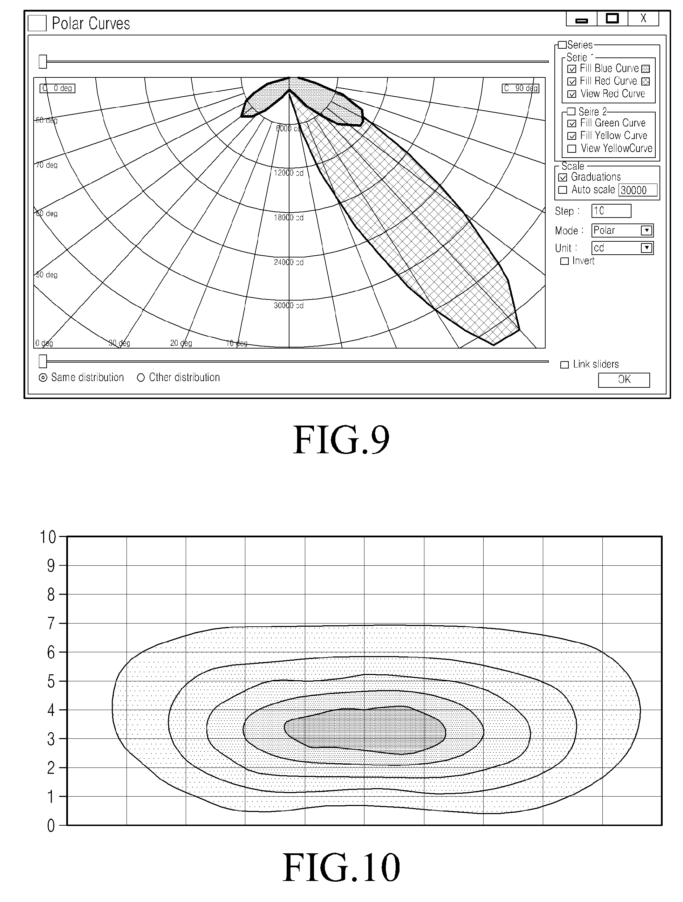

FIGS. 9 and 10 are graphs showing a polar light distribution simulation and luminance distribution on a road, when wattages are supplied to the first to sixth illumination units 1 to 6, as seen in Table 4.

Meanwhile, according to an embodiment of the present invention, the streetlamp 20 may further include a Switching Mode Power Supply (SMPS) and a controller, which are not shown in FIGS. 1 and 2, in addition to the plurality of illumination units 1 to 6 that can be dimming-controlled, wherein the controller may control the output of the SMPS to perform dimming-control.

The SMPS may receive power from a power source (not shown) to change current and/or voltage characteristics according to predetermined criteria, and to divide the power according to the control of the controller and transfer the divided power to the first to sixth illumination units 1 to 6.

The controller may control the SMPS to divide the power according to the predetermined criteria and transfer the divided power to the first to sixth illumination units 1 to 6, thereby controlling dimming of the first to sixth illumination units 1 to 6.

For example, the controller may control the SMPS to transfer, to at least one illumination unit of the plurality of illumination units, a wattage that is lower than that transferred to the other illumination units. As another example, the controller may control the SMPS to sequentially reduce a wattage that is supplied to each illumination unit in a direction from one end to the other end of the plurality of illumination units

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

For example, the above-described embodiment suggests the streetlamp further including the SMPS and the controller, wherein the SMPS is controlled according to the control of the controller to control wattages that are transferred to the illumination units, but, according to another embodiment of the present invention, wattages that are transferred to the illumination units may be set (for example, such that different wattages are supplied according to predetermined time zones) when the streetlamp is manufactured. Also, according to still another embodiment of the present invention, wattages that are transferred to the illumination units may be controlled through remote control.

## Claims

1. A method of controlling dimming of a streetlamp to reduce power consumption,
the streetlamp comprising a plurality of illumination units configured to be respectively dimming-controlled,
a wattage that is supplied to at least one illumination unit of the plurality of illumination units is lower than a wattage that is supplied to the other illumination units.

2. The method of claim 1, dimming of the plurality of illumination units is controlled such that a wattage that is supplied to each illumination unit is reduced in a direction from one end to the other end of the plurality of illumination units.

3. The method of claim 2, if the streetlamp is installed at a road on which a vehicle travels, the direction from the one end to the other end is same a direction in which the vehicle travels.

4. A streetlamp comprising:
a plurality of illumination units configured to be dimming-controlled;
a switching mode power supply configured to receive power, to divide the power according to the control of a controller, and to transfer the divided power to the plurality of illumination units; and
the controller configured to control the switching mode power supply to divide the power according to predetermined criteria and to transfer the divided power to the plurality of illumination units.

5. The streetlamp of claim 4, wherein the controller controls the switching mode power supply to transfer, to at least one illumination unit of the plurality of illumination units, a wattage that is lower than a wattage transferred to the other illumination units.

6. The streetlamp of claim 5, wherein the controller controls the switching mode power supply to sequentially reduce a wattage that is supplied to each illumination unit, in a direction from one end to the other end of the plurality of illumination units, and to transfer the sequentially reducing wattages to the respective illumination units
